# EUROPEAN PATENT APPLICATION

(11) **EP 3 632 816 A1**
(43) Veröffentlichungstag der Anmeldung: **08.04.2020**
(21) Anmeldenummer: 18828699.1
(22) Anmeldetag: 29.01.2018
(51) Int. Cl.: B65D 81/20

(54) **VERZEHRFERTIGES NAHRUNGSMITTEL IN VAKUUMVERPACKUNG**

(30) Priorität: 03.07.2017 UA 201706859 U
(71) Anmelder: Gostyukhina, Ella Vasylivna, Khmelnitsky 29000 (UA)
(72) Erfinder: Gostyukhina, Ella Vasylivna, Khmelnitsky 29000 (UA)
(74) Vertreter: Jeck, Anton
(86) Internationale Anmeldenummer: PCT/UA2018/000004
(87) Internationale Veröffentlichungsnummer: WO 2019/009868

(57) **Zusammenfassung**

Die Erfindung betrifft eine Verpackung eines Lebensmittelprodukts, beispielsweise für Fleisch, Meeresfrüchte, Geflügel, Milchprodukte usw., das verzehrfertig auf einem Halterspieß in Stücken aufgereiht und in eine Vakuumverpackung gegeben ist. Die Verpackung besteht aus zwei Wänden, der oberen Wand und der unteren Wand, die entlang einer am Rand der Verpackung befindlichen Umfangslinie miteinander versiegelt sind. Auf einer Seite der Umfangslinie sind Kerben an den gegenüberliegenden Enden, eine Perforation und ein Euroloch angebracht. Die obere Wand und die untere Wand können transparent gemacht werden. Die Bodenwand kann eine feste Auskleidung haben. Der Spieß hat eine gerade oder gewellte Form.

## Beschreibung

Die Erfindung betrifft in Vakuum gebrauchsfertig verpackte Lebensmittel, die direkt nach dem Öffnen der Verpackung verzehrt werden können.

Eine bekannte Verpackung für verzehrfertige Lebensmittel ist unter der UA 26845 veröffentlicht.

Nachteile dieser Verpackung sind:
- eine technologisch komplexe Ausführung;
- ein nur eingeschränkter Gebrauch des Lebensmittels, da für seine Verwendung zusätzlich ein Besteck benötigt wird (Gabel, Löffel, Messer).

Eine weitere Verpackung ist in der RU 51591 "Packaging for Food" beschrieben, die aus einem Polymermaterial in Form eines Beutels für Lebensmittel besteht. Sie enthält zusätzlich ein in einer Folie versiegeltes Besteck.

Nachteile dieser Verpackung sind:
- eine zusätzliche Preiserhöhung für ein Lebensmittel aufgrund der Bezahlung des

Bestecks;
- ein vermehrter Abfall, der zu zusätzlicher Umweltverschmutzung führt.

Bekannt sind auch Verpackungen insbesondere für Produkte, die aseptisch verpackt sind (UA 108136). Eine Ausführung besteht aus zwei gegenüberliegenden Vorderwänden, die durch thermisches Kleben entlang einer Umfangslinie miteinander verbunden sind. In diesem Fall enthalten die Wände mindestens eine Schicht aus Kunststoffmaterial, das durch Erhitzen
eine Versiegelung bewirkt. Die Umfangslinie der thermischen Verklebung befindet sich an der Schnittkante der Wände, und am Rande des Schnitts wird durch Aufspreizen des Kunststoffmaterials das Abdecken der verbundenen Schichten sichergestellt.

Nachteile des Patents sind:
- relativ hohe Verpackungskosten;
- die Schwierigkeit, feste und lose Lebensmittelprodukte in Verpackungen zu bringen;
- die Unfähigkeit, den Inhalt des verpackten Lebensmittelprodukts ohne zusätzliche Mittel zu verwenden.

Der Anmelder dieser Verpackung hat keine technische Lösung gefunden, die in der Nähe der wesentlichen Merkmale des vorliegenden Produkts liegt und für ihn als Prototyp geeignet wäre.

Jeder weiß, dass ein vollständiges und sicheres gesundes Essen oder ein Snack immer zur Hand sein sollten. Es macht die Menschen gesund und stark, und wenn die Erwachsenen gesund sind, dann werden auch die Kinder gesund sein. Die Kinder gehen zur Schule, um in der Klasse zu lernen und zu trainieren. Deshalb ist das Naschen für sie sehr wichtig. Aber ungewaschene Hände, das Fehlen selbst feuchter Tücher und vor allem Einweggeschirr sind unsere Realität. Für Schwangere oder stillende Mütter sowie für Menschen, für die eine gesunde Ernährung wichtig ist, ist auch die richtige und sichere Zubereitung und Aufbewahrung von Lebensmitteln relevant.

Der Erfindung liegt die Aufgabe zugrunde, für einen gegebenen Bereich möglichst viele Produkte pflanzlichen oder tierischen Ursprungs herzustellen. Ein offiziell als gesund eingestuftes Lebensmittelprodukt eingestuft wird von Experten offiziell genehmigt und durch Qualitätszertifikate, Zertifikate und mehr bestätigt. Darüber hinaus muss dieses Lebensmittelprodukt eine für den Verzehr geeignete Form und Größe sowie eine gewisse Haltbarkeit aufweisen. Da einige Produkte, insbesondere Fleisch oder Fisch, empfindlich gegen Austrocknen sind, führt dies zu Gewichtsverlust, Qualitäts- und Aussehenseinbußen. Andere Produkte neigen dazu, stark an Saftigkeit zu verlieren und Gerüche (Obst, Gemüse) zu sammeln.

Das Problem wird dadurch gelöst, dass das Lebensmittelprodukt gebrauchsfertig, in einer Vakuumverpackung mit praktischen Teilen auf einem Halterspieß aufgereiht und in eine Vakuumverpackung gelegt ist. Diese besteht aus zwei Wänden, der oberen Wand und der unteren Wand, die entlang einer Umfangslinie am Rand der Packung miteinander versiegelt sind. Auf einer Seite der Umfangslinie sind Kerben angebracht. Sie sind an den gegenüberliegenden Gliedern, der Perforation und dem Euroloch platziert. Die obere Deckwand der Vakuumverpackung besteht aus einer transparenten Folie mit einer Transparenz von 50 - 100%. Die untere Verkleidungswand ist entweder als obere hüllenartige Wand ausgeführt, oder zwischen ihnen kann ein Stützeinsatz zur zusätzlichen Fixierung des fertigen Produkts verwendet werden. Ein verzehrfertiges Lebensmittelprodukt besteht aus Fleisch, Meeresfrüchten, Geflügel, Gemüse, Obst oder Milchprodukten, und sein Halter ist in Form eines Spießes hergestellt. In einer Vakuumverpackung wird das Lebensmittelprodukt gemäß einem Schema geformt. Dabei werden Gewicht und Portionierung sowie Variationen bei der Verwendung des gleichen Produkts oder Mischungen daraus verfolgt.

Das technische Ergebnis der vorliegenden Erfindung besteht darin, dass das vorgeschlagene verzehrfertige Lebensmittelprodukt in einer einzigen Dosis in einer versiegelten Verpackung angeordnet wird und gegessen werden kann. Dabei sind das Händewaschen und die Verwendung eines Bestecks nicht zwingend notwendig.

Der Vergleich der vorliegenden technischen Lösung mit den bekannten Lösungen ergab keine ähnlichen Lebensmittelprodukte, die sich durch Merkmale auszeichnen, die mit allen in den von der Anmelderin vorgeschlagenen Ansprüchen enthaltenen Merkmalen identisch sind. Das heißt, die wesentlichen Merkmale der vorliegenden Lösung waren nicht bekannt, und sie sind mit keiner technischen Lösung identisch. Das vorliegende Produkt erfüllt somit die Bedingung der Neuheit und somit der Patentierbarkeit.

Das Wesen der Erfindung wird anhand von Zeichnungen näher erläutert.

Es zeigen:

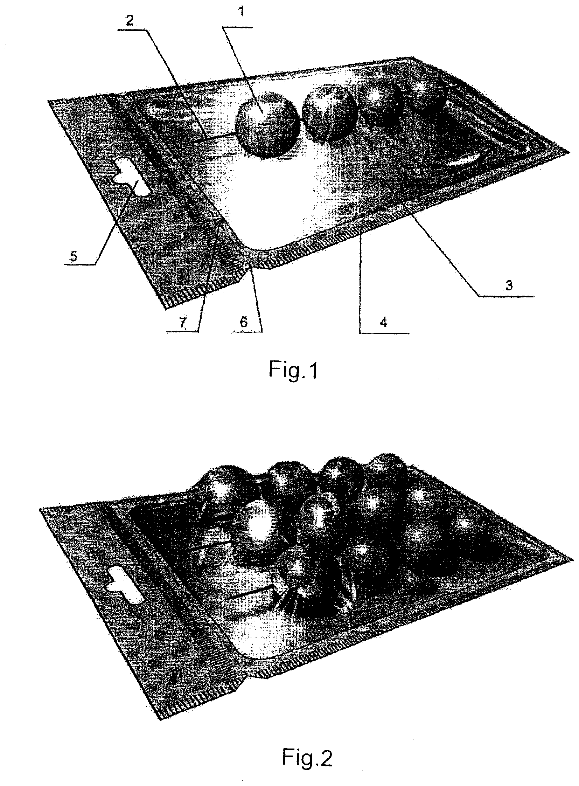

Fig. 1 eine Ansicht des vorliegenden Produkts und
Fig. 2 eine mögliche Verwendung des vorliegenden Produkts.

In den Figuren bezeichnen die Zahlen:
- 1: Lebensmittelprodukt
- 2: Halterspieß
- 3: Vakuumverpackung
- 4: periphere Linie
- 5: Euroloch
- 6: Kerben
- 7: perforierte Linie

Lebensmittelprodukte, die zum weiteren Verzehr wärmebehandelt werden müssen, werden mit Technologien hergestellt, die die meisten nützlichen Eigenschaften der Produkte aufweisen. Ferner wird das fertige Produkt zerkleinert und zu einer Größe geformt, die für die Verwendung geeignet ist. Ein Biss sollte einem Biss entsprechen. Dies ist aus Gründen der Benutzerfreundlichkeit erforderlich, damit die Lebensmittel nicht zerbröckeln, nicht tropfen, nicht fallen usw. Ein solches Lebensmittelprodukt 1 wird auf einen Halterspieß 2 aufgereiht, der aus irgendeinem sicheren Material besteht: Holz, Bambus oder Lebensmittelkunststoff (kurz oder lang, dick oder dünn, gleichmäßig oder gewellt). Anschließend wird das fertige Lebensmittelprodukt in eine Vakuumverpackung 3 gegeben. Die obere Wand und die untere Wand sind entlang der Umfangslinie 4 aneinander befestigt. Die Vakuumverpackung 3 sollte eine Transparenz von 50 - 100% mit oder ohne Trägereinsatz aufweisen, auch nach dem Aufbringen der Information, so dass das Lebensmittelprodukt 1 selbst für den Verbraucher gut sichtbar ist. Der Trägereinsatz kann aus einem speziellen Material hergestellt sein, das für Lebensmittelprodukte verwendet werden darf: Kunststoff, laminierte Pappe usw. Dieser Einsatzhalter kann transparent oder undurchsichtig, härter oder flexibler, gefärbt oder nicht gefärbt sein. Dann wird die Packung 3 evakuiert. Dies ermöglicht es, die Nützlichkeit und Frische des Lebensmittelprodukts 1 zu bewahren. Um den Verkauf zu vereinfachen und die Form und das allgemeine Erscheinungsbild des Lebensmittelprodukts 1 zu erhalten, ist an einer Seite der Umfangslinie 4 ein Euroloch 5 angebracht. Durch dieses Euroloch kann die Verpackung 3 an einem speziellen Stiel für Lebensmittel aufgehängt werden (in den Zeichnungen nicht gezeigt). Zusätzlich zum Euroloch 5 ist die Umfangslinie 4 auf den gegenüberliegenden Seiten der Kerbe 6 und der perforierten Linie 7 für eine klare und gleichmäßige Trennung hergestellt. Dank der Kerben 6 und der perforierten Linie 7 ist es sehr einfach, die Verpackung 3 zu zerbrechen, um das Lebensmittel 1 zu erhalten. Es können Fleisch, Meeresfrüchte, Geflügel, Gemüse, Obst, Milchprodukte und mehr vorhanden sein.

Das vorliegende Lebensmittelprodukt bietet eine bequeme Handhabung, das heißt, sein Verzehr ist an jedem geeigneten Ort möglich, ohne zusätzliche Probleme zu verursachen. Im Wesentlichen handelt es sich bei der Erfindung um eine Vakuumverpackung für gebrauchsfertige Lebensmittel.

## Patentansprüche

1. In Vakuum gebrauchsfertig verpacktes Lebensmittelprodukt,
**dadurch gekennzeichnet.**
**dass** sie auf einem Halterspieß mit einfach zu verwendenden Teilen aufgereiht und in eine Vakuumverpackung gelegt sind,
**dass** diese Verpackung aus zwei Wänden, der oberen Wand und der unteren Wand, besteht, die entlang einer Umfangslinie am Rand der Packung miteinander versiegelt sind, und
**dass** auf einer Seite der Umfangslinie Kerben an den gegenüberliegenden Enden einer Perforation und eines Eurolochs angebracht sind.

2. Lebensmittelprodukt nach Anspruch 1,
**dadurch gekennzeichnet,**
**dass** es sich um Fleisch, Meeresfrüchte, Geflügel, Milchprodukte, Gemüse, Obst oder dergleichen handelt.

3. Lebensmittelprodukt nach Anspruch 1,
**dadurch gekennzeichnet,**
**dass** die obere Deckwand der Vakuumverpackung aus einer transparenten Weichfolie mit einer Transparenz von 50 - 100% besteht und die untere Deckwand der Vakuumverpackung entweder wie die obere Abdeckwand oder aber mit einem soliden Liner-Stand hergestellt ist.

4. Lebensmittelprodukt nach Anspruch 1,
**dadurch gekennzeichnet,**
**dass** der Halterspieß des Lebensmittelprodukts entweder eine gerade Form oder eine figurierte Form aufweist.
